Europäisches Patentamt

European Patent Office

Office européen des brevets

(11) Veröffentlichungsnummer: **0 355 485**
**A2**

## (12) EUROPÄISCHE PATENTANMELDUNG

(21) Anmeldenummer: 89114123.6

(22) Anmeldetag: 31.07.89

(51) Int. Cl.⁴: **G01M 1/28**

(30) Priorität: 23.08.88 DE 3828610

(43) Veröffentlichungstag der Anmeldung:
28.02.90 Patentblatt 90/09

(84) Benannte Vertragsstaaten:
**DE FR GB IT**

(71) Anmelder: **A. ROHE GMBH**
**Aschaffenburger Strasse 48**
**D-8752 Schöllkrippen(DE)**

(72) Erfinder: **Bux, Hermann**
**Kurt-Stieler-Strasse 1**
**D-8134 Pöcking-Possenhofen(DE)**
Erfinder: **Ross, Peter**
**Huge -Tröndle-Strasse 19**
**D-8000 München 50(DE)**

(74) Vertreter: **Kirschner, Klaus Dieter et al**
**Patentanwälte Herrmann-Trentepohl**
**Kirschner Grosse Bockhorni Forstenrieder**
**Allee 59**
**D-8000 München 71(DE)**

(54) **Vorrichtung zum Bestimmen der Unwucht von an einem Kraftfahrzeug montierten Rädern.**

(57) Eine Vorrichtung zum Bestimmen der Unwucht von an einem Kraftfahrzeug montierten Rädern enthält wenigstens einen Meßbock zum Abstützen eines Kraftfahrzeugrades, einen im Meßbock vorgesehenen Meßwertgeber, der von der Unwucht hervorgerufene Schwingungen aufnimmt und ein Gebersignal abgibt, eine Meß/Steuereinrichtung, die aus den Gebersignalen Unwuchtsignale erzeugt, die die Unwucht nach Größe und Richtung angeben, eine Anzeigeeinrichtung, an der wenigstens die Unwuchtgröße angezeigt wird, und eine drahtlose Signalübertragungseinrichtung auf dem Weg zwischen dem Meßwertgeber und der Anzeigeeinrichtung.

Fig 1

Vorrichtung zum Bestimmen der Unwucht von an einem Kraftfahrzeug montierten Rädern

Die Erfindung betrifft eine Vorrichtung zum Bestimmen der Unwucht von an einem Kraftfahrzeug montierten Rädern, die wenigstens einen Meßbock zum Abstützen eines Kraftfahrzeugrades, einen im Meßbock vorgesehenen Meßwertgeber, der von der Unwucht hervorgerufene Schwingungen aufnimmt und ein Gebersignal abgibt, eine Meß-Steuereinrichtung, die aus den Gebersignalen Unwuchtsignale erzeugt, die die Unwucht nach Größe und Richtung angeben, eine Anzeigeeinrichtung, an der wenigstens die Unwuchtgröße angezeigt wird, und eine drahtlose Signalübertragungseinrichtung auf dem Weg zwischen dem Meßwertgeber und der Anzeigeeinrichtung.

Bei einer bekannten derarigen Vorrichtung wird versucht, Meßsignale von dem Meßbock an eine Anzeigeeinrichtung zu übertragen, die in dem Gerät enthalten ist, das auch zum Antrieb des Rades verwendet wird. Die bekannte Vorrichtung hat sich jedoch nicht als funktionstüchtig erwiesen. Außerdem ist sie auch nicht geeignet, das Wuchten am Fahrzeug durchzuführen, wenn das Fahrzeug einen permanenten Allradantrieb hat.

Der Erfindung liegt demgegenüber die Aufgabe zugrunde, eine Vorrichtung zum Bestimmen der Unwucht von an einem Kraftfahrzeug montierten Rädern anzugeben, bei der die Messungen an den einzelnen Rädern möglichst ohne Standortwechsel von Gerätschaften oder Bedienungspersonal in kurzer Zeit ohne grossen Aufwand durchgeführt werden können.

Dazu ist die erfindungsgemäße Vorrichtung dadurch gekennzeichnet, daß für mehrere Meßblöcke eine zentrale Anzeige-Steuereinrichtung vorgesehen ist, und daß die Meßböcke und die Anzeige-Steuereinrichtung Sender/Empfänger-Einrichtungen zur Signalübertragung aufweisen, wobei Signale von den Meßböcken an die Anzeige-Steuereinrichtung und Steuersignale von der Anzeige-Steuereinrichtung an die Meßböcke übertragbar sind.

Dadurch ist es möglich, von einer Stelle aus mit einer Anzeige-Steuereinrichtung sowohl die Meßwerte abzurufen als auch Steuersignale an die Meßböcke zu geben, wobei das Meßverfahren wesentlich vereinfacht wird, indem die Meßwerte der einzelnen Räder nacheinander abgerufen werden können.

Nach einer weiteren vorteilhaften Ausgestaltung der Erfindung ist die Vorrichtung dadurch gekennzeichnet, daß die Sender/Empfängereinrichtungen an den Meßblöcken derart ausgestaltet sind, daß die Meß- und Steuersignale über jeden der Meßböcke zu den anderen Meßböcken übertragbar sind. Dadurch ist es möglich, die Meß- und Steuersignale zwischen den Meßböcken und der Anzeige-Steuereinrichtung zu übertragen, sobald ein einziger Übertragungsweg von der Anzeige-Steuereinrichtung zu einem der Meßböcke gegeben ist. Damit ist der Standort der Anzeige-Steuereinrichtung in großem Umfang beliebig wählbar, ohne daß Probleme mit den sogenannten Sendeschatten entstehen.

Nach einer weiteren vorteilhaften Ausgestaltung der Erfindung ist die Vorrichtung dadurch gekennzeichnet, daß die Sender/Empfänger-Einrichtung Infrarotsender und -empfänger aufweist, und daß rundum abstrahlende Sender vorgesehen sind, wobei insbesondere an einem Meßbock zwei oder mehrere Sender und Empfänger angeordnet sind. Infrarotfrequenzen werden bevorzugt, weil bei der Verwendung von Funkfrequenzen Störungen anderer Meßgeräte zu erwarten und eventuell Sondergenehmigungen einzuholen sind. Durch die Ausgestaltung der Infrarotübertragung ist die Nutzung von Infrarotfrequenzen unproblematisch.

Eine weitere vorteilhafte Ausgestaltung der Erfindung ist dadurch gekennzeichnet, daß die Meß/Steuereinrichtung im Meßbock angeordnet ist, und daß die Sender/Empfänger-Einrichtungen zwischen der Meß/Steuereinrichtung und der Anzeige-Steuereinrichtung liegen. Wenn sowohl der Meßteil als auch der Steuerteil der Meß/Steuereinrichtung in dem Meßbock angeordnet ist, können sowohl die Steuersignale als auch die am Meßbock ermittelten Meßsignale über einen Übertragungsweg übertragen werden.

Eine vorteilhafte Ausführung der erfindungsgemäßen Vorrichtung, bei der einen Abtasteinrichtung mit Sender und Empfänger zur Abtastung einer Markierung an dem Rad vorgesehen ist, um bei angetriebenem Rad ein die Drehzahl des Rades darstellendes Drehzahlsignal abzugeben, ist dadurch gekennzeichnet, daß die Abtasteinrichtung am Meßbock auf seiner dem Rad zugewandten Seite angeordnet ist, und daß der Sender und der Empfänger der Abtasteinrichtung auf einer anderen Frequenz als die Sender/Empfängereinrichtung für die Signalübertragung arbeiten, wobei sie vorzugsweise bei an einem Rad angeordnetem Meßbock der Lauffläche des Rades gegenüberliegt, wobei eine auf der Lauffläche des Rades angeordnete Markierung abtastbar ist. Durch diese Vorrichtung können sowohl die Unwuchtsignale für Größe und Richtung der Unwucht als auch die Drehzahlsignale und die Steuersignale über ein und denselben Übertragungsweg übertragen werden.

Eine weitere vorteilhafte Ausgestaltung der erfindungsgemäßen Vorrichtung ist dadurch gekennzeichnet, daß ein erster Kennungsmodulator/Demodulator in der Meß-Steuereinrichtung im Meßbock und ein zweiter Kennungsmodulator Demodulator in der Anzeigesteuereinrichtung vorgesehen sind, um durch einen Kennungssatz die zwischen den Meß-Steuereinrichtungen in den Meßböcken und der Anzeige-Steuereinrichtung übertragenen Signale einem bestimmten Meßbock bzw. Rad zuzuordnen. Dadurch wird die Handhabung der Vorrichtung wesentlich erleichtert, weil alle Meßeinrichtungen gleichzeitig arbeiten können, und die Meßwerte über Kennung nacheinander abgerufen werden können.

Eine weitere vorteilhafte Ausgestaltung der erfindungsgemäßen Vorrichtung ist dadurch gekennzeichnet, daß in der Anzeige-Steuereinrichtung und in dem Meß-Steuereinrichtungen der Meßböcke Umschalteinrichtungen vorgesehen sind, um die Kennungsmodulatoren/Demodulatoren auf weitere Kennungssätze umzuschalten. Dadurch werden Störungen vermieden, wenn zwei Kraftfahrzeuge gleichzeitig nebeneinander vermessen werden.

Weitere vorteilhafte Ausgestaltungen der erfindungsgemäßen Vorrichtung sind dadurch gekennzeichnet, daß die Anzeige-Steuereinrichtung einen flexiblen Lichtleiter aufweist, an dessen Ende eine Linse vorgesehen ist. oder daß die Anzeige-Steuereinrichtung eine Leitung aufweist, an deren Ende eine Sender/Empfängereinheit angeordnet ist. Dadurch wird die Sende/Empfangsebene auf eine Ebene unterhalb des Kraftfahrzeugchassis verlegt, so daß die Bedienungsperson im Kraftfahrzeug sitzen kann, ohne daß die Signalübertragung durch Sendeschatten beeinträchtigt wird.

Ausführungsbeispiele der Erfindung werden nun anhand der beiliegenden Zeichnungen beschrieben. Es zeigen:

Fig. 1 eine Seitenansicht eines Meßbockes;

Fig. 2 eine schematische Darstellung eines Kraftfahrzeuges mit die vier Räder abstützenden Meßböcken und der Anzeige-Steuereinrichtung;

Fig. 3 eine Draufsicht auf die Anzeige-Steuereinrichtung;

Fig. 4 eine Seitenansicht einer ersten Ausführungsform einer Anzeige-Steuereinrichtung;

Fig. 5 eine Seitenansicht einer zweiten Ausführungsform der Anzeige-Steuereinrichtung; und

Fig. 6 eine dritte Ausführungsform der Anzeige-Steuereinrichtung.

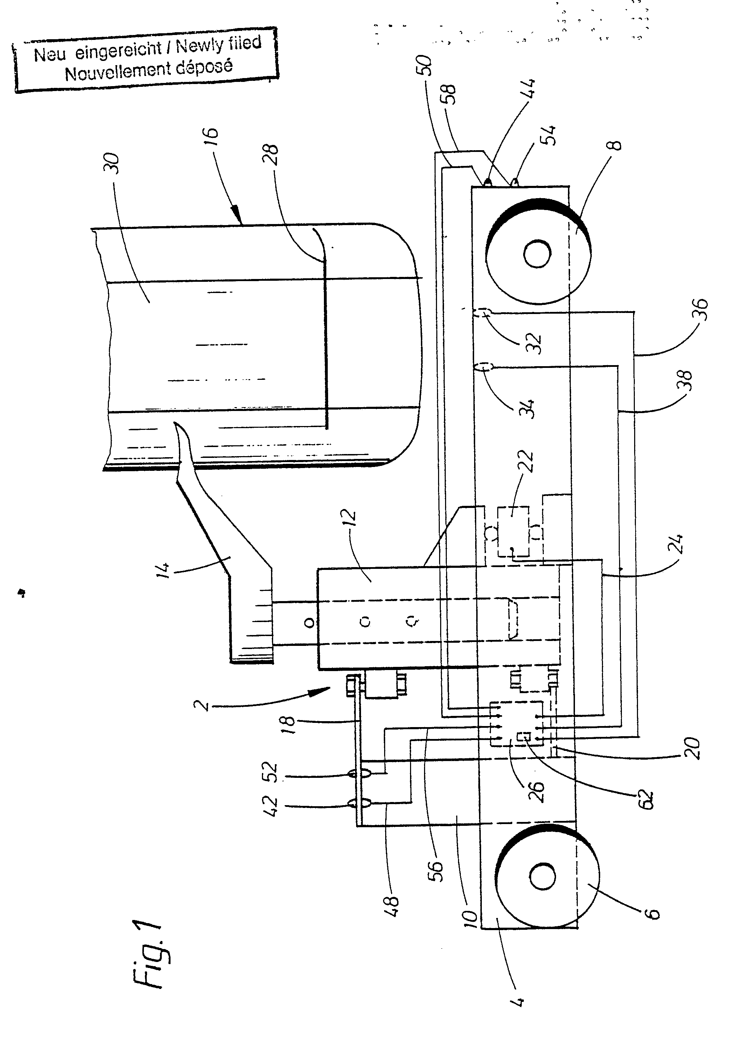

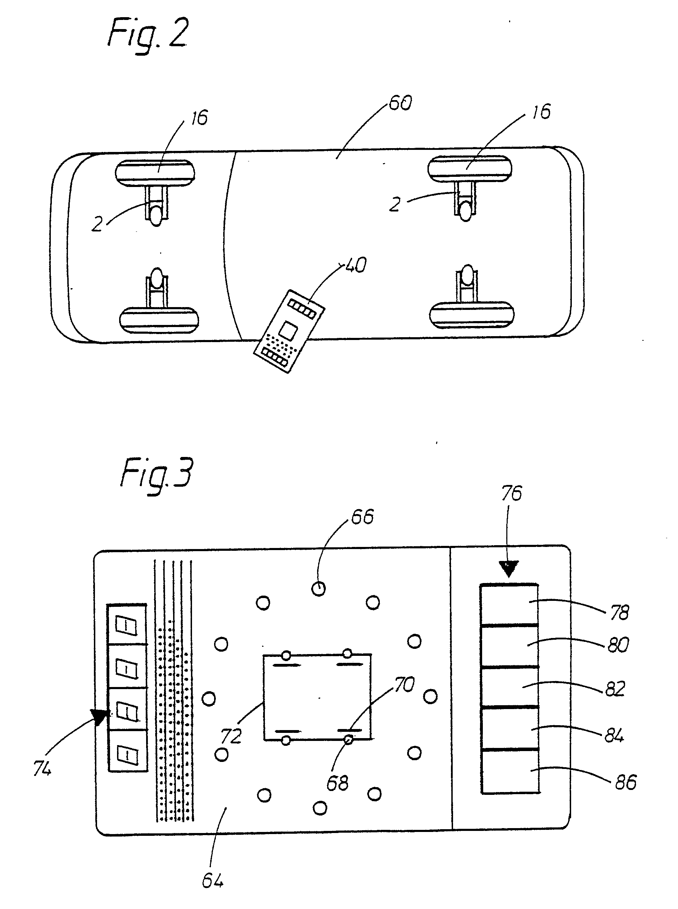

In Fig. 1 ist ein Meßbock 2 gezeigt, der ein Gestell 4 mit Rädern 6, 8 aufweist. An dem Gestell 4 ist über eine Säule 10 und eine weitere Säule 12 eine Aufnahmekrone 14 angeordnet, mit der das angehobene Kraftfahrzeugrad 16 auf der gewünschten Höhe abgestützt wird. Die Säule 10 ist mit der Säule 12 über zwei Träger 18, 20 verbunden, und zwischen der Säule 12 und dem Gestell 4 ist ein Meßwertgeber 22 angeordnet. Bei dieser Anordnung werden die von der Unwucht des Kraftfahrzeugrades 16 hervorgerufenen Schwingungen von dem Meßwertgeber 22 aufgenommen, der daraufhin Gebersignale über eine Leitung 24 an eine Meß/Steuereinrichtung 26 abgibt. Zur Ermittlung der Richtung der Unwucht und der Drehzahl des angetriebenen Kraftfahrzeugrades 16 ist eine Markierung 28 an der Lauffläche 30 des Kraftfahrzeugrades vorgesehen, die über einen Sender 32 und einen Empfänger 34 an der der Lauffläche 30 gegenüberliegenden Seite des Gestells 4 abgetastet wird. Der Sender 32 ist über eine Leitung 36 und der Empfänger 34 über eine Leitung 38 mit der Meß/Steuereinrichtung 26 verbunden. Die Meß/Steuereinrichtung 26 erzeugt in ansich bekannter Weise aus den Signalen des Meßwertgebers 22 und des Emfängers 34 Signale entsprechend der Unwuchtgröße und -richtung und der Drehzahl des Rades 16 und gibt die entsprechenden Signale drahtlos an eine Anzeige-Steuereinrichtung 40 (Fig. 2) ab. Für die Übertragung ist der Infrarotfrequenzbereich bevorzugt. In diesem Fall werden rundum abstrahlende Sender verwendet, die mehrere im Kreis angeordnete, nach außen abstrahlende Sendedioden aufweisen. An dem Meßbock 2 in Fig. 1 sind zwei derartige Sender 42, 44 vorgesehen, von denen der eine Sender 42 auf der dem Rad 16 abgewandten Seite der Säule 12 und der andere Sender 44 an der außenliegenden Stirnseite 46 des Gestells 4 angeordnet ist. Der Sender 42 ist über eine Leitung 48 und der Sender 44 über eine Leitung 50 mit der Meß/Steuereinrichtung 26 verbunden. Die Meß/Steuereinrichtung 40 über einen Empfänger 52 und/oder einen Empfänger 54, wobei die beiden Empfänger 52, 54 mit der Meß/Steuereinrichtung durch Leitungen 56 bzw. 58 verbunden sind. Wenn an einem Meßbock 2 mehrere Sender/Empfänger für die Übertragung der Signale zwischen der Meß/Steuereinrichtung und der Anzeige-Steuereinrichtung verteilt angeordnet sind, wird eine sichere Übertragung der Signale auch dann gewährleistet, wenn der direkte Übertragungsweg zwischen einem Sender/Empfänger-Paar beispielsweise durch ein Rad unterbrochen ist.

In Fig. 2 ist schematisch ein Kraftfahrzeug 60 mit vier Rädern 16 und vier Meßböcken 2 gezeigt, die jeweils unter einem Rad angeordnet sind, damit ein Kraftfahrzeug mit permanentem Allradantrieb auf Unwucht vermessen werden kann. Für alle vier Meßböcke ist die zentrale Anzeige- und Steuereinrichtung 40 vorgesehen. Sowohl die Meßböcke 2 als auch die Anzeige-Steuereinrichtung haben Sender und Empfänger zur Signalübertragung, wobei die Signale von den Meßböcken 2 an die Anzeige-Steuereinrichtung 40 und Steuersignale von der Anzeige-Steuereinrichtung 40 an die Meßböcke 2 bzw. an die in den Meßböcken angeordneten Meß/Steuereinrichtungen übertragbar sind. Damit die zwischen den Meßböcken und der Anzeige-Steuereinrichtung 40 übertragenen Signale einem bestimmten Meßbock bzw. Rad zugeordnet werden können, sind in der Anzeige-Steuereinrichtung 40 und in den Meß-Steuereinrichtungen 26 der Meßböcke Kennungsmodulatoren,-Demodulatoren angeordnet, wobei ein bestimmter in einem Meßbock angeordneter Kennungsmodulator -Demodulator auf eine für ein bestimmtes Rad charakteristische Kennung einstellbar ist, die dann von dem Kennungsmodulator,-Demodulator in der Anzeige-Steuereinrichtung 40 erkannt wird. Zur Einstellung der Kennung an einem bestimmten Meßbock ist eine Tasteinrichtung 62 vorgesehen, die schematisch in Fig. 1 gezeigt ist. Die Tasteinrichtung 62 hat beispielsweise vier Tasten für "Meßbock steht vorne links", "Meßbock steht vorne rechts", Meßbock steht hinten links", bzw. "Meßbock steht hinten rechts". Wenn zwei Kraftfahrzeuge nebeneinander stehen und gleichzeitig vermessen werden sollen, kann für das zweite Kraftfahrzeug ein weiterer Kennungssatz vergeben werden. Dazu sind in der Anzeige-Steuereinrichtung und in den Meß Steuereinrichtungen Umschalteinrichtungen vorgesehen, um auf weitere Kennungssätze umzuschalten.

Die Anzeige-Steuereinrichtung 40 weist gemäß Fig. 3 ein LCD-Feld 64 auf. Die in der Art eines Zifferblatts angeordneten Punkte 66 zeigen die Richtung der Unwucht im Bezug auf einen Referenzpunkt an. Die Punkte 68, in denen schematisch Markierungen 70 für die Räder des Kraftfahrzeuges und ein schematisches Schaubild 72 für das Kraftfahrzeug 60 abgebildet sind, zeigen an, welches Rad gerade gemessen wird. Eine Ziffernanzeige 74 dient zur Anzeige der Unwuchtgröße bzw. der Raddrehzahl. Ein Tastenfeld 76 weist eine Taste 78 für Start,Stop der Messung, eine Taste 80 zum Umschalten von Gramm- auf Unze-Anzeige, eine Taste 82 zum Abrufen der Raddrehzahl, eine Taste 84 zum Abruf der Unwuchtdaten nach Größe und Richtung und eine Taste 86 auf, um die Umschalteinrichtung zum Umschalten auf einen anderen Kennungssatz zu aktivieren.

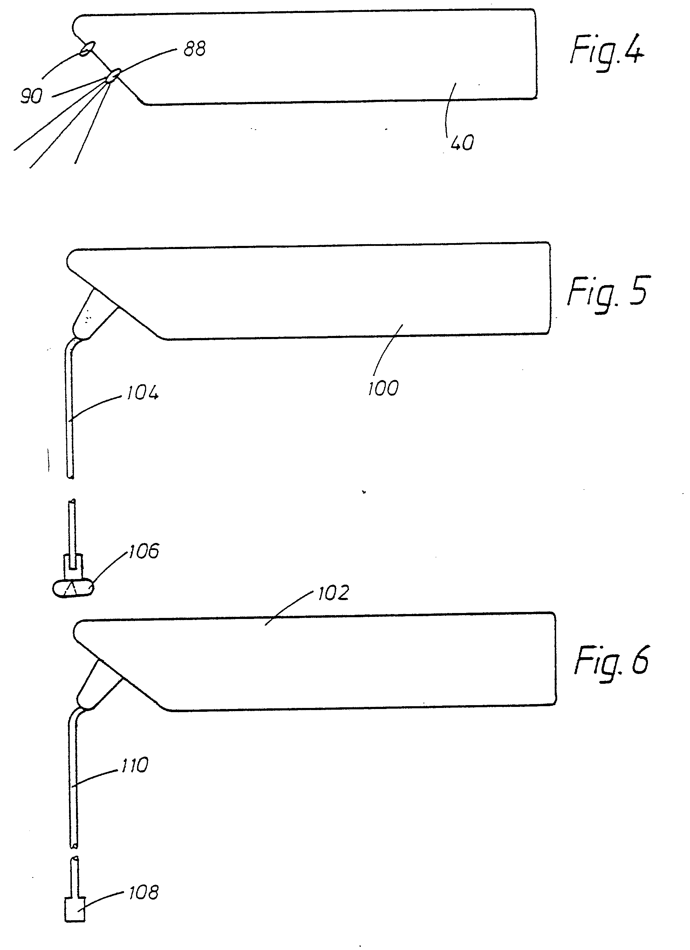

In Fig. 4 ist schematisch dargestellt, wie an der Anzeige-Steuereinrichtung 40 ein Sender 88 und ein Empfänger 90 an einer abgeschrägten Stirnwand angeordnet sind. Damit sind Sender und Empfänger schräg nach unten orientiert, so daß ein Übertragungsweg zwischen der Anzeige-Steuereinrichtung 40 und den Sendern/Empfängern an den Meßböcken 2 hergestellt werden kann, wenn die Anzeige-Steuereinrichtung 40 aus dem Fenster des Kraftfahrzeuges gehalten oder seitlich von dem Kraftfahrzeug auf die Meßböcke gerichtet wird. Um die Handhabung zu erleichtern, ist bei Anzeige-Steuereinrichtungen 100 (Fig. 5) bzw. 102 (Fig. 6) vorgesehen, daß der Punkt, an dem Signale von der Anzeige-Steuereinrichtung empfangen bzw. abgegeben werden, auf eine Ebene unterhalb des Kraftfahrzeugchassis verlegt wird. Dazu ist bei der Anzeige-Steuereinrichtung 100 der Sender Empfänger in der Einrichtung selbst untergebracht, und die Signale werden von dem Sender über einen Lichtleiter 104 und eine Linse 106 gesendet bzw. über die Linse 106 empfangen und durch den Lichtleiter 104 an den Empfänger gegeben. Bei der Anzeigeein-richtung 102 ist die Sender,Empfängereinheit 108 am Ende einer elektrischen Leitung 110 angeordnet.

In der vorstehenden Figurenbeschreibung wird auf die Vermessung eines Kraftfahrzeuges mit permanentem Allradantrieb Bezug genommen. In anderen Fällen, wenn zum Antrieb der Räder separate Einrichtungen vorgesehen sind, können auch diese über die Anzeige-Steuereinrichtung entsprechende Steuersignale erhalten, um den Antrieb ein- und auszuschalten, zu beschleunigen bzw. abzubremsen.

## Ansprüche

1. Vorrichtung zum Bestimmen der Unwucht von an einem Kraftfahrzeug montierten Rädern, die wenigstens einen Meßbock zum Abstützen eines Kraftfahrzeugrades, einen im Meßbock vorgesehenen Meßwertgeber, der von der Unwucht hervorgerufene Schwingungen aufnimmt und ein Gebersignal abgibt, eine Meß/Steuereinrichtung, die aus den Gebersignalen Unwuchtsignale erzeugt, die die Unwucht nach Größe und Richtung angeben, eine Anzeigeeinrichtung, an der wenigstens die Unwuchtgröße angezeigt wird, und eine drahtlose Signalübertragungseinrichtung auf dem Weg zwischen dem Meßwertgeber und der Anzeigeeinrichtung, dadurch gekennzeichnet, daß für mehrere Meßböcke (2) eine zentrale Anzeige-Steuereinrichtung (40, 100, 102) vorgesehen ist, und daß die Meßböcke und die Anzeige-Steuereinrichtung Sender/Empfänger-Einrichtungen zur Signalübertragung aufweisen, wobei Signale von den Meßböcken an die Anzeige-Steuereinrichtung und Steuersignale von der Anzeige-Steuereinrichtung an die Meßböcke übertragbar sind.

2. Vorrichtung nach Anspruch 1, dadurch gekennzeichnet, daß die Sender/Empfängereinrichtungen an den Meßblöcken (2) derart ausgestaltet sind, daß die Meß- und Steuersignale über jeden der Meßböcke zu den anderen Meßböcken übertragbar sind.

3. Vorrichtung nach Anspruch 1 oder 2, dadurch gekennzeichnet, daß die Sender/Empfänger-Einrichtung Infrarotsender und -empfänger aufweist, und daß rundum abstrahlende Sender vorgesehen sind.

4. Vorrichtung nach Anspruch 3, dadurch gekennzeichnet, daß an einem Meßbock (2) mehrere Sender (42, 44) und Empfänger (52, 54) angeordnet sind.

5. Vorrichtung nach einem der Ansprüche 1 bis 5, dadurch gekennzeichnet, daß die Meß-Steuereinrichtung im Meßbock angeordnet ist, und daß die Sender Empfänger-Einrichtungen zwischen der Meß-Steuereinrichtung und der Anzeige-Steuereinrichtung liegen.

6. Vorrichtung nach Anspruch 5, wobei eine Abtasteinrichtung mit Sender und Empfänger zur Abtastung einer Markierung an dem Rad vorgesehen ist, um bei angetriebenem Rad ein die Drehzahl des Rades darstellendes Drehzahlsignal abzugeben, dadurch gekennzeichnet, daß die Abtasteinrichtung am Meßbock auf seiner dem Rad zugewandten Seite angeordnet ist, und daß der Sender (32) und der Empfänger (34) der Abtasteinrichtung auf einer anderen Frequenz als die Sender Empfängereinrichtung für die Signalübertragung arbeiten.

7. Vorrichtung nach Anspruch 6, dadurch gekennzeichnet, daß die Abtasteinrichtung an dem Meßbock (2) derart angeordnet ist, daß sie bei an einem Rad angeordnetem Meßbock der Lauffläche des Rades gegenüberliegt, wobei eine auf der Lauffläche des Rades angeordnete Markierung abtastbar ist.

8. Vorrichtung nach einem der Ansprüche 1 bis 5, dadurch gekennzeichnet, daß ein erster Kennungsmodulator/Demodulator in der Meß-Steuereinrichtung im Meßbock (2) und ein zweiter Kennungsmodulator/Demodulator in der Anzeigesteuereinrichtung vorgesehen sind, um durch einen Kennungssatz die zwischen den Meß/Steuereinrichtungen in den Meßböcken und der Anzeige-Steuereinrichtung übertragenen Signale einem bestimmten Meßbock bzw. Rad zuzuordnen.

9. Vorrichtung nach Anspruch 8, dadurch gekennzeichnet, daß der erste Kennungsmodulator/Demodulator in einem Meßbock auf eine für ein bestimmtes Rad charakteristische Kennung einstellbar ist.

10. Vorrichtung nach Anspruch 9, dadurch gekennzeichnet, daß zur Einstellung der Kennung eine Tasteinrichtung vorgesehen ist.

11. Vorrichtung nach einem der Ansprüche 8 bis 10, dadurch gekennzeichnet, daß in der Anzeige-Steuereinrichtung und in dem Meß/Steuereinrichtungen der Meßböcke Umschalteinrichtungen vorgesehen sind, um die Kennungsmodulatoren/Demodulatoren auf weitere Kennungssätze umzuschalten.

12. Vorrichung nach einem der Ansprüche 1 bis 5, dadurch gekennzeichnet, daß die Anzeige-Steuereinrichtung (100) einen flexiblen Lichtleiter (104) aufweist, an dessen Ende eine Linse (106) vorgesehen ist.

13. Vorrichtung nach einem der Ansprüche 1 bis 5, dadurch gekennzeichnet, daß die Anzeige-Steuereinrichtung (102) eine Leitung (110) aufweist, an deren Ende eine Sender/Empfängereinheit (108) angeordnet ist.

Fig.1

## Fig. 2

16    60    16
2                    2

40

## Fig. 3

66    76

74                78
80
82
70    84
72    68    86

64

EP 0 355 485 A2

*Fig.4*

88

90

40

*Fig.5*

104

100

106

102

*Fig.6*

110

108